# EUROPÄISCHE PATENTSCHRIFT

(11) **EP 2 273 120 B1**
(45) Veröffentlichungstag und Bekanntmachung des Hinweises auf die Patenterteilung: **12.09.2012**
(21) Anmeldenummer: 10183209.5
(22) Anmeldetag: 14.02.2005
(51) Int. Cl.: F04B 39/00, F01N 1/08, F04B 17/05

(54) **Druckschalldämpfer für eine Versorgungsaggregateanordnung für ein Kraftfahrzeug**
Pressure sound damper for a supply apparatus for a motor vehicle
Amortisseur de bruit de refoulement pour un appareil d'alimentation pour un véhicule automobile

(30) Priorität: 13.02.2004 DE 202004002341 U
(43) Veröffentlichungstag der Anmeldung: 12.01.2011
(62) Teilanmeldung aus: 09005879.3
(73) Patentinhaber: TVE Schutzrechte GmbH, 45470 Mühlheim/Ruhr (DE)
(72) Erfinder: Schübler, Hans Hubert, 45479, Mülheim a. d. Ruhr (DE)
(74) Vertreter: UEXKÜLL & STOLBERG

(56) Entgegenhaltungen:
- EP-A1- 0 542 169
- DE-A1- 3 514 475
- DE-A1- 19 606 698
- DE-C- 726 028
- US-A- 2 919 761
- US-B2- 6 609 590

## Beschreibung

Die Erfindung betrifft eine Versorgungsaggregateanordnung für ein Kraftfahrzeug, insbesondere für einen Lastkraftwagen, mit einem Kompressor und einem dem Kompressor an dessen druckseitigem Ausgang nachgeschalteten Druckschalldämpfer.

Lastkraftwagen müssen neben den für Kraftfahrzeugen allgemein üblichen Vorrichtungen häufig noch mit Versorgungsaggregaten wie etwa Kompressoren, Pumpen, Hydraulikpumpen oder Generatoren ausgerüstet werden. Derartige Vorrichtungen sind beispielsweise für das Be- und Entladen von Lastkraftwagen notwendig, beispielsweise bei Silofahrzeugen oder Sattelzugmaschinen, die Siloauflieger ziehen, und werden bevorzugt vom Motor des Lastkraftwagens mechanisch angetrieben. Ansonsten wäre ein weiterer Motor erforderlich. Ein solcher zusätzlicher Motor hätte erhöhte Kosten zur Folge und würde durch sein Eigengewicht das maximal zuladbare Gewicht reduzieren. Daher ist eine Lösung, die einen weiteren Motor zum Antrieb des Versorgungsaggregats benötigt, wirtschaftlich nicht sinnvoll.

Aus der DE 196 06 698 A1 und der EP 0 542 169 A1, von denen die vorliegende Erfindung ausgeht, sind Versorgungsaggregateanordnungen mit einem Kompressor und einem dem Kompressor an dessen druckseitigem Ausgang nachgeschalteten Druckschalldämpfer bekannt, die zur Schallvernichtung einen Zentralkanal mit einer oder mehreren Querschnittsänderungen (in DE 19 606 698 A1 der Fall) oder Krümmungen (in EP 0 542 169 A1 der Fall) aufweisen.

Die U.S. 6,609,590 B2 offenbart einen Schalldämpfer in einer Abgasanlage mit einem Abgasrohr und mehreren in dem Abgasrohr angeordneten Prallkörpern, insbesondere Prallblechen. Die Prallbleche sind unter verschiedenen Winkeln gegenüber der Strömungsrichtung angeordnet und weisen eine Vielzahl von Öffnungen auf, die gemäß unterschiedlichen Mustern ausgebildet und zueinander angeordnet sind.

Die DE 35 14 475 A1 lehrt einen Schalldämpfer für die Abgasanlage einer Brennkraftmaschine. Der Schalldämpfer weist ein Einlassrohr und ein Auslassrohr auf, die miteinander verbunden sind und deren Innenräume durch eine Trennwand voneinander getrennt sind. Die Trennwand weist mehrere Durchbrüche auf.

Die DE 726 028 offenbart einen Ansaugschalldämpfer für Verdichter und Gebläse mit einem Rohrmantel, in dessen Innenraum parallel zur Strömungsrichtung eine Vielzahl kleiner Röhrchen angeordnet ist. Aus der U.S. 2,919,761 ist ein Abgasschalldämpfer für Verbrennungsmotoren bekannt.

Insbesondere bei Sattelschleppern ergibt sich das Problem, dass der Raum an dem Chassis der Zugmaschine für das Anbringen von Versorgungsaggregaten eng begrenzt ist. Der Raum oberhalb des Chassis hinter der Fahrerkabine der Zugmaschine wird vom Auflieger eingenommen, so dass an dieser Stelle keine Versorgungsaggregate angebracht werden können.

Der einzig verbleibende Raum ist demnach der außerhalb des Chassis zwischen der Vorder- und der Hinterachse. Ein besonderes Platzproblem besteht allerdings an Fahrzeugen mit kurzen Radständen oder solchen, die rechts und links des Chassisrahmens mit Kraftstofftanks versehen sind, die jeweils zwischen dem entsprechenden Vorder- und Hinterrad angeordnet sind.

Verstärkt wird das Platzproblem, wenn die Hinterachse der Zugmaschine als Zwillingsachse ausgeführt ist, was der Fall ist, wenn das zulässige Gesamtgewicht des Sattelzuges bei über 40 t liegt. Dann verringert sich der zwischen den Achsen zur Verfügung stehenden Raum weiter, da in einem solchen Fall die Gesamtlänge der Zugmaschine nahezu unverändert bleibt.

Der Antrieb der Versorgungsaggregate erfolgt in der Regel in der Weise, dass das Versorgungsaggregat eine Gelenkwelle aufweist, die mit einem Nebenabtrieb des Getriebes verbunden ist. Eine solche Gelenkwelle ist unter anderem deswegen erforderlich, um einerseits das Versorgungsaggregat schwingungstechnisch von dem Rest des Fahrzeuges zu entkoppeln und andererseits eine vergleichsweise einfache Montage bzw. Demontage des Versorgungsaggregats zu ermöglichen. Neben dem Versorgungsaggregat muss also auch genügend Raum zur Verfügung stehen, um eine entsprechende Gelenkwelle vom Getriebe zum Versorgungsaggregat zu führen.

Schließlich ist ein Versorgungsaggregat üblicherweise mit einem oder mehreren Schalldämpfern versehen, vorzugsweise einem vorgeschalteten Ansaugschalldämpfer und einem nachgeschalteten Druckschalldämpfer. Diese Schalldämpfer haben die Aufgabe, den im Versorgungsaggregat entstehenden und über das Arbeitsfluid, beispielsweise die Luft, transportierten Schall möglichst zu verringern. Bei der Anordnung eines Versorgungsaggregats muss also auch der Raum für Schalldämpfer und einen entsprechenden Fluidfilter, beispielsweise Luftfilter, der in der Regel zwischen dem Ansaugschalldämpfer und dem Versorgungsaggregat angeordnet ist, berücksichtigt werden.

Der Erfindung liegt daher das technische Problem zugrunde, eine Versorgungsaggregateanordnung gemäß dem Oberbegriff des Anspruchs 1 bereitzustellen, die möglichst platzsparend am Kraftfahrzeug angeordnet werden kann und zu hoher Schallvernichtung bei niedrigem Druckverlust führt.

Dieses zuvor aufgezeigte technische Problem wird gemäß der Erfindung durch eine Versorgungsaggregateanordnung mit den Merkmalen des Anspruchs 1 gelöst.

Demgemäß ist im Druckschalldämpfer ein Prallkörper vorgesehen, der senkrecht zur Strömungsrichtung angeordnet ist und in Strömungsrichtung mehrere Durchlässe aufweist. Der Prallkörper ist dabei vorzugsweise im Zentralkanal angeordnet, kann aber auch an anderer Stelle des Druckschalldämpfers vorgesehen sein. Ein solcher Prallkörper, der vorzugsweise ein Prallblech ist, führt zu einer hohen Schallvernichtung bei niedrigem Druckverlust.

Die äußeren Abmessungen des Prallkörpers sollten dabei den inneren Abmessungen des Kanals, in dem dieser angeordnet ist, entsprechen, so dass die Arbeitsfluidströmung ausschließlich durch die Durchlässe im Prallkörper in Richtung Auslass strömen kann. Als besonders geeignet hat sich ein Prallkörper mit einem quadratischen Querschnitt erwiesen, der dementsprechend in einem quadratischen Kanal angeordnet ist.

Vorzugsweise hat der Prallkörper fünf Durchlässe, wobei vorzugsweise ein Durchlass mittig zwischen vier äußeren Durchlässen angeordnet ist. Die vier äußeren Durchlässe sollten dabei den gleichen Abstand zueinander und insbesondere den gleichen Querschnitt haben. Der Querschnitt des mittigen Durchlasses sollte kleiner als der Querschnitt der äußeren Durchlässe sein. Beispielsweise sollte der Querschnitt der äußeren Durchlässe mindestens doppelt so groß wie der Querschnitt des mittigen Durchlasses sein. Als optimal hat sich ein Querschnitt für den mittigen Durchlass von 600 bis 800 mm², insbesondere 700 mm², erwiesen.

Gemäß einer vorteilhaften Ausgestaltung ist der Querschnitt des mittigen Durchlasses rund und der Querschnitt der äußeren Durchlässe jeweils halbkreisförmig. Dabei ist es von Vorteil, wenn der Radius der äußeren Durchlässe mindestens doppelt so groß wie der Radius des mittigen Durchlasses ist, der beispielsweise 10 bis 20 mm, insbesondere 15 mm, beträgt. Der Abstand zwischen den jeweils benachbarten äußeren Durchlässen kann zwischen 40 und 50 mm liegen und beträgt vorzugsweise 42 mm. Der Abstand zwischen dem mittigen Durchlass und den äußeren Durchlässen kann zwischen 20 und 30 mm liegen und beträgt vorzugsweise 27 mm. Die Dicke des Prallkörpers bzw. Prallblechs sollte, in Strömungsrichtung gesehen, zwischen 5 und 15 mm liegen und vorzugsweise 11 mm betragen.

Innerhalb des jeweiligen Kanals, in dem der Prallkörper vorgesehen ist, insbesondere also innerhalb des Zentralkanals, ist der Prallkörper vorteilhafterweise in einer Kammer mit einer Einlassöffnung und einer Auslassöffnung so angeordnet, dass er mittig zwischen der Einlassöffnung und der Auslassöffnung positioniert ist. Beispielsweise kann der Abstand zwischen dem Prallkörper und der Einlassöffnung der Kammer zwischen 30 und 50 mm, insbesondere 38 mm, betragen. Dies hat sich als besonders strömungsgünstig erwiesen.

Schließlich ist auch besonders günstig für die Strömungsverhältnisse und für die Schallreduktion, wenn der Durchmesser bzw. doppelte Radius des mittigen Durchlasses kleiner als der Abstand des Prallkörpers zur Einlassöffnung der Kammer ist und wiederum der Abstand des Prallkörpers zur Einlassöffnung kleiner als der Durchmesser bzw. doppelte Radius der äußeren Durchlässe ist.

Der vorangehend gemäß der vorliegenden Erfindung beschriebene Druckschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Druckschalldämpfer ist aber nicht nur für die zuvor beschriebene Versorgungsaggregateanordnung geeignet, sondern kann auch unabhängig davon eingesetzt werden.

Gemäß einem weiteren Aspekt ist erkannt worden, dass der Raum innerhalb des Chassis, also in dem Bereich, der nicht über den Fahrzeugrahmen des Chassis hinausgeht, nicht ungenutzt bleiben muss, wie dies im Stand der Technik üblich ist, sondern zum Anordnen des Versorgungsaggregats besonders geeignet ist. Wird also das Versorgungsaggregat innerhalb des vom Fahrzeugrahmen begrenzten Bereichs angeordnet, so dass es also nicht seitlich über den Fahrzeugrahmen hinausragt, dann ist der Raum außerhalb des Chassis, also der Raum zwischen dem jeweiligen Vorder- und Hinterrad, vollständig für zusätzliche Kraftstofftanks oder zusätzlichen Stauraum nutzbar. Das Versorgungsaggregat kann sich in dem Raum oberhalb und insbesondere unterhalb des Chassis erstrecken und diesen Raum ausfüllen, der ebenfalls im Stand der Technik nicht genutzt worden ist.

Es wird damit eine Lösung geschaffen, mit der nachhaltig ein kostengünstiger und technisch stabiler Betrieb bei gleichzeitig verringertem Eigengewicht und erhöhter Nutzlast von Kraftfahrzeugen, insbesondere von Lastkraftwagen, ermöglicht wird.

Entsprechend ist es auch vorteilhaft, die ggf. mit dem Versorgungsaggregat verbundenen Schalldämpfer ebenfalls platzsparend innerhalb des Chassis anzuordnen. So kann ein Ansaugschalldämpfer mit Gehäuse, der einem saugseitigen Eingang des Arbeitsfluids des Versorgungsaggregats vorgeschaltet ist, und/oder ein Druckschalldämpfer mit Gehäuse, der einem druckseitigen Ausgang des Arbeitsfluids des Versorgungsaggregats nachgeschaltet ist, innerhalb des vom Fahrzeugrahmen begrenzten Bereichs angeordnet werden, also derart, dass der jeweilige Schalldämpfer nicht seitlich über den Fahrzeugrahmen des Chassis hinausragt.

Das Versorgungsaggregat, bei dem es sich beispielsweise um einen Kompressor wie einen Schraubenkompressor, insbesondere mit einem Fördervolumen von 400-1000 m³/h, handeln kann, kann beispielsweise mit dem Fahrzeugrahmen verbunden sein über einen am Fahrzeugrahmen befestigten Träger, der insbesondere durch eine Kompressoraufnahme, z.B. eine Stahlplatte, gebildet ist. Das Versorgungsaggregat kann aber auch unmittelbar mit dem Fahrzeugrahmen verbunden sein.

Auch der Ansaugschalldämpfer und/oder der Druckschalldämpfer kann unmittelbar am Fahrzeugrahmen befestigt sein. Dann kann der Schalldämpfer gleichzeitig Träger für die übrigen Bestandteile der Versorgungsaggregateanordnung sein, insbesondere für das Versorgungsaggregat und/oder den anderen Schalldämpfer, so dass ein zusätzlicher, am Fahrzeugrahmen befestigter Träger wie eine Kompressoraufnahme nicht unbedingt notwendig wäre. Dennoch kann zusätzlich, um die Stabilität zu erhöhen, ein solcher zusätzlicher Träger vorgesehen sein.

Der Fahrzeugrahmen des Chassis kann ein U-Profil, wobei die offene Seite zur Chassis-Innenseite gerichtet ist, oder ein T- oder Rohrprofil aufweisen.

Wenn der Fahrzeugrahmen des Chassis ein U-Profil, wobei die offene Seite zur Chassis-Innenseite gerichtet ist, oder ein T-Profil aufweist, kann zumindest ein Teil des Ansaugschalldämpfers und/oder des Druckschalldämpfers innerhalb des Profils angeordnet sein. Vorzugsweise ist dies der Druckschalldämpfer. Das Versorgungsaggregat kann dann unmittelbar darunter angeordnet sein. Dies führt zu einer optimalen Raumausnutzung, die sogar noch weiter verbessert werden kann, indem der Schalldämpfer das U- oder T-Profil im Querschnitt vollständig ausfüllt, so dass das Volumen des Profils ebenfalls nicht ungenutzt bleibt. Eine entsprechende Raumausnutzung ist auch bei einem Rohrprofil denkbar, wenn zur Chassis-Innenseite gerichtete Öffnungen darin vorgesehen sind.

Gemäß einer bevorzugten Ausführungsform ist der Ansaugschalldämpfer unmittelbar an den saugseitigen Eingang des Versorgungsaggregats und/oder der Druckschalldämpfer unmittelbar an den druckseitigen Ausgang des Versorgungsaggregats angeflanscht. Eine solche Bauweise ist nicht nur besonders platzsparend, sondern das unmittelbare Anflanschen führt auch zu einer wesentlichen Reduzierung der Geräusche, da der Schall keine Möglichkeit hat, zwischen dem Versorgungsaggregat und dem Schalldämpfer auszutreten.

Durch die vorstehend beschriebene Anordnung ist auch genügend Raum im Chassis vorhanden, um eine zum Versorgungsaggregateantrieb gehörende Gelenkwelle von einem Nebenabtrieb des Kraftfahrzeuggetriebes zum Versorgungsaggregat zu führen. Dabei ist vorzugsweise das Versorgungsaggregat zwischen einer mit dem Hauptabtrieb des Getriebes verbundenen Hauptwelle und dem Fahrzeugrahmen, insbesondere mittig dazwischen, angeordnet.

Ein dritter Aspekt betrifft einen Ansaugschalldämpfer mit einem Gehäuse, der dem saugseitigen Eingang eines Versorgungsaggregats vorgeschaltet sein kann, wobei in das Ansaugschalldämpfergehäuse ein Fluidfilter, insbesondere ein Luftfilter, integriert ist. Unabhängig vom Vorhandensein eines integrierten Luftfilters kann gemäß der zweiten Lehre der vorliegenden Erfindung im Innern des Ansaugschalldämpfergehäuses ein Prallkörper, vorzugsweise zwei Prallkörper, angeordnet sein.

Mit einem integrierten Fluidfilter kann das Arbeitsfluid vor dem Einströmen in das Versorgungsaggregat gefiltert werden. Dies führt zu einer besonders kompakten Bauweise der Versorgungsaggregateanordnung, da kein Raum mehr für ein separates Luftlfiltergehäuse beansprucht wird. Auch die Herstellungskosten werden durch Wegfall eines zusätzlichen Gehäuses für den Filter verringert. Schließlich führt diese Bauweise auch zu einer weiteren Geräuschreduktion, da der Ansaugschalldämpfer unmittelbar an das Versorgungsaggregat angeschlossen werden kann. Bei dem Filter handelt es sich vorzugsweise um einen Papierfilter oder einen Baumwollfilter.

Die Prallkörper, bei denen es sich beispielsweise um ein Reflektorblech handeln kann, sorgen für eine besonders schallreduzierende Strömung des den Schalldämpfer durchströmenden Fluids. Der Effekt kann dadurch noch verstärkt werden, dass der Ansaugschalldämpfer einen Einlass und einen Auslass aufweist, wobei die dazugehörige Einlassöffnung und Auslassöffnung jeweils an gegenüberliegenden Seiten des Ansaugschalldämpfergehäuses, insbesondere zueinander versetzt, angeordnet sind.

Vorzugsweise ist ein Prallkörper in Strömungsrichtung hinter dem Ansaugschalldämpfereinlass, insbesondere in einem Abstand von 30 bis 40 mm, vorzugsweise von 36 mm, angeordnet, wobei der Prallkörper derart geformt sein kann, dass die Strömung des einströmenden Arbeitsfluids hinter dem Einlass um 80 bis 100°, insbesondere um 90°, in Richtung einer Seitenwand des Ansaugschalldämpfergehäuses umgelenkt wird.

Es kann auch ein Prallkörper in Strömungsrichtung vor dem Ansaugschalldämpferauslass, insbesondere in einem Abstand von 40 bis 60 mm, vorzugsweise von 48 mm, angeordnet sein. Der Prallkörper kann derart geformt sein, dass die Strömung des Arbeitsfluids vor dem Auslass zunächst in zwei Teilströme getrennt wird, die jeweils in einem Winkel von 80 bis 100°, insbesondere von 90°, zur Ausströmrichtung verlaufen und unmittelbar vor dem Auslass wieder zusammengeführt werden. Vorteilhafterweise haben der bzw. die Prallkörper, beispielsweise die zuvor beschriebenen Reflektorbleche, eine Stärke von 4 bis 8 mm, insbesondere von 6 mm. Dies alles führt zu einer besonders guten Schallreduktion bei gleichzeitig kompakter Bauweise.

Als besonders geeignet hat sich eine Ausführungsform des Ansaugschalldämpfers herausgestellt, bei der die Einlassöffnung einen rechteckigen Querschnitt hat, der vorzugsweise eine Breite von 60 bis 80 mm, vorzugsweise von 70 mm, und eine Länge von 200 bis 250 mm, vorzugsweise von 230 mm, hat.

Die Auslassöffnung kann beispielsweise einen runden Querschnitt haben, vorzugsweise mit einem Durchmesser von 90 bis 110 mm, vorzugsweise von 100 mm. Aus Platzgründen sollte das Ansaugschalldämpfergehäuse im wesentlichen eine Breite von 250 bis 300 mm, insbesondere von 280 mm, eine Länge von 340 bis 420 mm, insbesondere von 380 mm, und eine Tiefe von 200 bis 250 mm, insbesondere von 230 mm, haben und vorzugsweise eine Materialstärke von mindestens 8 mm, insbesondere von mindestens 10 mm, aufweisen. Dadurch wird gleichzeitig eine gute Schalldämpfung erreicht.

Zur einfacheren Montage oder Reparatur kann das Ansaugschalldämpfergehäuse aus einer ersten Gehäusehälfte und einer zweiten Gehäusehälfte zusammengesetzt sein. Die erste Gehäusehälfte, in der vorzugsweise der Ansaugschalldämpfereinlass angeordnet ist, hat dann beispielsweise eine Breite von 250 bis 300 mm, insbesondree von 280 mm, eine Länge von 340 bis 420 mm, insbesondere von 380 mm, und eine Tiefe von 80 bis 110 mm, insbesondere 96 mm, und die zweite Gehäusehälfte, in der der Ansaugschalldämpferauslass angeordnet sein kann, eine Breite von 250 bis 300 mm, insbesondere von 280 mm, eine Länge von 340 bis 420 mm, insbesondere von 380 mm, und eine Tiefe von 110 bis 150 mm, insbesondere von 135 mm.

Der vorangehend beschriebene Ansaugschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Ansaugschalldämpfer ist aber nicht nur für die zuvor beschriebene Versorgungsaggregateanordnung geeignet, sondern kann auch unabhängig davon eingesetzt werden.

Ein vierter Aspekt betrifft einen Druckschalldämpfer mit einem Gehäuse, der einem druckseitigen Ausgang eines Versorgungsaggregats nachgeschaltet sein kann, wobei das Gehäuse einen Einlass bestehend aus einer Einlassöffnung und einem Einlasskanal aufweist, wobei unmittelbar hinter der Einlassöffnung eine Verengung des Querschnitts gefolgt von einer Erweiterung des Querschnitts des Einlasskanals vorgesehen ist. Mit anderen Worten, unmittelbar hinter der Einlassöffnung ist erfindungsgemäß eine Venturi-Düse angeordnet. Der Fluidstrom bzw. Luftstrom, der den Schall trägt, hat dadurch weniger Kontakt mit der Innenwand des Einlasskanals. Die Folge ist, dass weniger Körperschall entsteht, weil auch der Schall weniger mit der Wand in Kontakt kommt, die Wand also weniger Schall überträgt.

Dabei ist es von besonderem Vorteil, wenn die Verengung durch einen an der Innenwand des Einlasskanals umlaufenden Wulst gebildet ist, der vorzugsweise einen halbkreisförmigen Querschnitt, beispielsweise mit einem Radius von 4 bis 8 mm, insbesondere von 6 mm, hat. Die Verengung sollte derart ausgebildet sein, dass der Querschnitt des Einlasskanals im Bereich der Verengung mindestens 25%, vorzugsweise mindestens 30%, kleiner als der Querschnitt der Einlassöffnung ist. Ferner sollte die Erweiterung derart ausgebildet sein, dass der Querschnitt des Einlasskanals im Bereich der Erweiterung mindestens 50%, vorzugsweise mindestens 60%, größer als der Querschnitt im Bereich der Verengung ist.

Vorzugsweise hat der Einlasskanal im Bereich der Erweiterung, also nach der Verengung, einen größeren Querschnitt als die Einlassöffnung. Haben Einlassöffnung und Einlasskanal beispielsweise einen runden Querschnitt, dann hat vorzugsweise die Einlassöffnung einen Durchmesser von 60 bis 80 mm, insbesondere von 70 mm, der Einlasskanal im Bereich der Verengung einen Durchmesser von 45 bis 65 mm, insbesondere von 55 mm, und der Einlasskanal im Bereich der Erweiterung einen Durchmesser von 65 bis 85 mm, insbesondere von 74 mm.

Gemäß einer bevorzugten Ausführungsform hat der Druckschalldämpfer einen Einlasskanal mit einer Umlenkzone, in der das Arbeitsfluid, beispielsweise die Luft, um vorzugsweise 80 bis 100°, insbesondere um 90°, umgelenkt wird. An den Einlasskanal kann sich ein Zentralkanal anschließen, der ebenfalls eine oder mehrere Umlenkzonen, die jeweils durch einen Knick im Verlauf des Zentralkanals gebildet sein können, aufweist. Im Zentralkanal sind dabei auch eine oder mehrere Ruhezonen vorgesehen, die vorzugsweise durch einen Bereich mit einem erweiterten Querschnitt gebildet sind.

Der vorangehend gemäß der dritten Lehre der vorliegenden Erfindung beschriebene Druckschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Druckschalldämpfer ist aber nicht nur für die zuvor beschriebene Versorgungsaggregateanordnung geeignet, sondern kann auch unabhängig davon eingesetzt werden.

Ein fünfter Aspekt betrifft einen Auslass eines Druckschalldämpfers, der dem druckseitigen Ausgang eines Versorgungsaggregats nachgeschaltet sein kann, wobei der Auslass einen gegenüber dem übrigen Teil des Druckschalldämpfers drehbaren Kopf aufweist, insbesondere einen um 360° drehbaren Kopf, mit einem Auslasskanal und mindestens einer Auslassöffnung. Durch einen solchen drehbaren Kopf wird eine hohe Flexibilität betreffend die Anschlussmöglichkeiten des Druckschalldämpfers bei gleichzeitig äußerst kompakter Bauweise erreicht.

Vorzugsweise ist die Auslassöffnung winkelig zum Auslasskanal angeordnet, derart, dass das in den Kopf einströmende Arbeitsfluid unmittelbar vor der Auslassöffnung umgelenkt wird. Damit wird eine letzte Umlenkzone in dem Druckschalldämpfer geschaffen. Als besonders geeignet hat sich eine Umlenkung um 80 bis 100°, insbesondere um 90°, herausgestellt, das heißt, die Auslassöffnung ist dann in einem Winkel von 80 bis 100°, insbesondere von 90°, zum Auslasskanal angeordnet.

Es kann auch vorgesehen sein, dass in dem als drehbarer Kopf ausgebildeten Auslass eine weitere Auslassöffnung vorgesehen ist, die in unmittelbarer Verlängerung des Auslasskanals, das heißt in Strömungsrichtung, angeordnet ist. Auf diese Weise bestehen eine Vielzahl von Anschlussmöglichkeiten an den Auslass. Dieser kann nahezu jeder Gegebenheit ohne größeren Aufwand angepasst werden. Abhängig davon, welche der beiden Auslassöffnungen letztlich verwendet wird, kann die jeweils andere Auslassöffnung durch einen Blindstopfen verschlossen sein.

Der vorangehend gemäß dem fünften Aspekt beschriebene Druckschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Druckschalldämpfer ist aber nicht nur für die zuvor beschriebene Versorgungsaggregateanordnung geeignet, sondern kann auch unabhängig davon eingesetzt werden.

Im folgenden wird die Erfindung nur beispielhaft anhand der Zeichnungen beschrieben. Dabei zeigt
- Fig. 1a) bis c): eine schematische Darstellung einer Versorgungsaggregateanordnung,
- Fig. 2a) bis d): eine Schnittansicht eines zweiteiligen Ansaugschalldämpfers,
- Fig. 3: eine Schnittansicht eines erfindungsgemäßen Druckschalldämpfers für eine Versorgungsaggregateanordnung,
- Fig. 4: eine Schnittansicht eines Druckschalldämpfereinlasses,
- Fig. 5: eine Schnittansicht einer Kammer eines Druckschalldämpferkanals mit einem Prallblech gemäß der vorliegenden Erfindung, und
- Fig. 6: eine Teilschnittansicht eines Druckschalldämpfer auslasses.

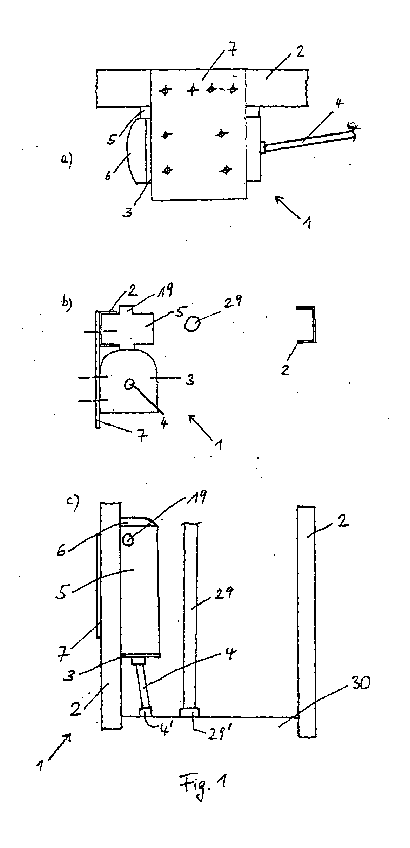

Fig. 1a) zeigt eine Versorgungsaggregateanordnung 1 für einen Lastkraftwagen umfassend ein Chassis 2 mit einem Fahrzeugrahmen, ein Versorgungsaggregat 3 in Form eines Kompressors und einen Versorgungsaggregateantrieb 4 mit einer Gelenkwelle, die mit einem Nebenabtrieb 4' des Fahrzeuggetriebes 30 verbunden ist. Dem Versorgungsaggregat 3 ist ein Druckschalldämpfer 5 nachgeschaltet, welcher oberhalb des Versorgungsaggregats 3 mit dem Chassis 2 fest verschraubt ist. Dem Versorgungsaggregat 3 ist ferner ein Ansaugschalldämpfer 6 vorgeschaltet über den gefilterte Luft eingeleitet wird. Als Träger des Versorgungsaggregats 3 dient eine Kompressoraufnahme 7, die fest mit dem Chassis 2 verschraubt ist.

In Fig. 1b) und c) ist erkennbar, dass weder das Versorgungsaggregat 3 noch die beiden Schalldämpfer 5 und 6 seitlich über das Chassis 2 hinausragen. So kann der Raum außerhalb des Chassis 2 für andere Zwecke, beispielsweise für separate Kraftstofftanks, genutzt werden.

Der Fahrzeugrahmen des Chassis 2 weist im vorliegenden Fall ein U-Profil auf, wobei die offene Seite zur Chassis-Innenseite gerichtet ist. Dabei wird das Volumen des U-Profils dadurch optimal ausgenutzt, dass der Druckschalldämpfer 5 das U-Profil im Querschnitt vollständig ausfüllt.

Fig. 1c) verdeutlicht außerdem, wie der Versorgungsaggregateantrieb funktioniert. So weist das Fahrzeuggetriebe einen Hauptabtrieb 29' auf, der die angetriebenen Räder über eine Hauptwelle 29 antreibt, sowie einen Nebenabtrieb 4', der über eine Gelenkwelle auf das Versorgungsaggregat 3 wirkt. Im dargestellten Fall ist das Versorgungsaggregat zwischen der Hauptwelle 29 und dem Fahrzeugrahmen des Chassis 2 angeordnet.

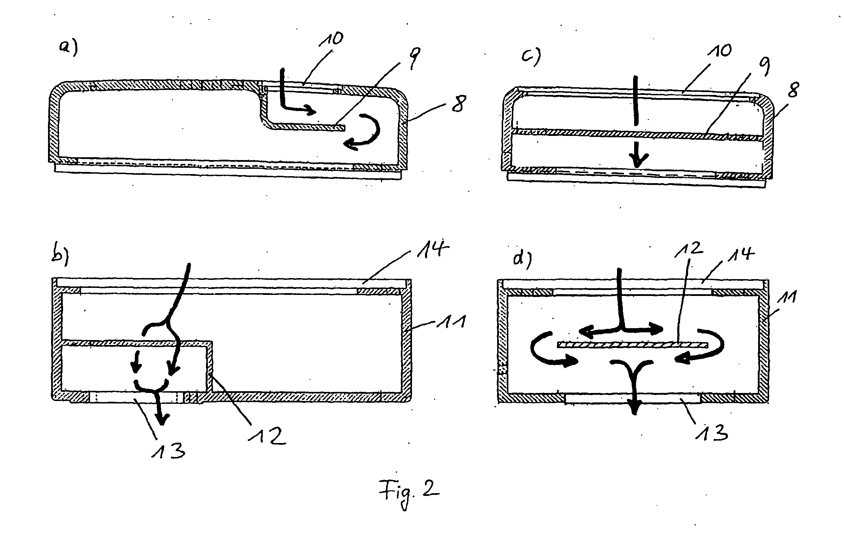

In Fig. 2a) ist eine erste Gehäusehälfte 8 eines Ansaugschalldämpfergehäuses mit einem ersten Prallkörper 9 in Form eines Reflektorbleches im Bereich der Einlassöffnung 10 dargestellt. Fig. 2c) zeigt eine Schnittansicht derselben Gehäusehälfte 8, die gegenüber der Schnittansicht aus Fig. 2a) um 90° gedreht ist.

Fig. 2b) zeigt die entsprechende zweite Gehäusehälfte 13, die einen zweiten Prallkörper 12 ebenfalls in Form eines Reflektorbleches im Bereich der Auslassöffnung 13 aufweist. Fig. 2d) ist eine Schnittansicht derselben dieselbe Gehäusehälfte 11, wobei die Ansicht gegenüber der aus Fig. 2b) um 90° gedreht ist.

Ein Luftfilter 14, beispielsweise ein Baumwollfilter, kann im zusammengesetzten Zustand der beiden Gehäusehälften 8 und 11 zwischen diesen angeordnet werden.

Die Luftströmung durch die beiden Gehäusehälften 8 und 11 entlang der Prallkörper 9 und 12 ist durch Pfeile dargestellt. Der erste Prallkörper 9 ist in einem Abstand von 36 mm derart hinter dem Ansaugschalldämpfer 6 angeordnet, dass die Strömung des einströmenden Arbeitsfluids hinter dem Einlass 10 um 90° in Richtung der rechten Seitenwand der ersten Gehäusehälfte 8 umgelenkt wird. Nachdem das Arbeitsfluid anschließend den Filter 14 passiert hat, trifft dieses auf den zweiten Prallkörper 12. Der Prallkörper 12 ist derart geformt, dass die Strömung des Arbeitsfluids zunächst in zwei Teilströme getrennt wird, die jeweils in einem Winkel von 90° zur Ausströmrichtung verlaufen und unmittelbar vor dem Auslass wieder zusammengeführt werden. Der Prallkörper 12 ist dabei in einem Abstand von 48 mm vom Auslass 13 angeordnet.

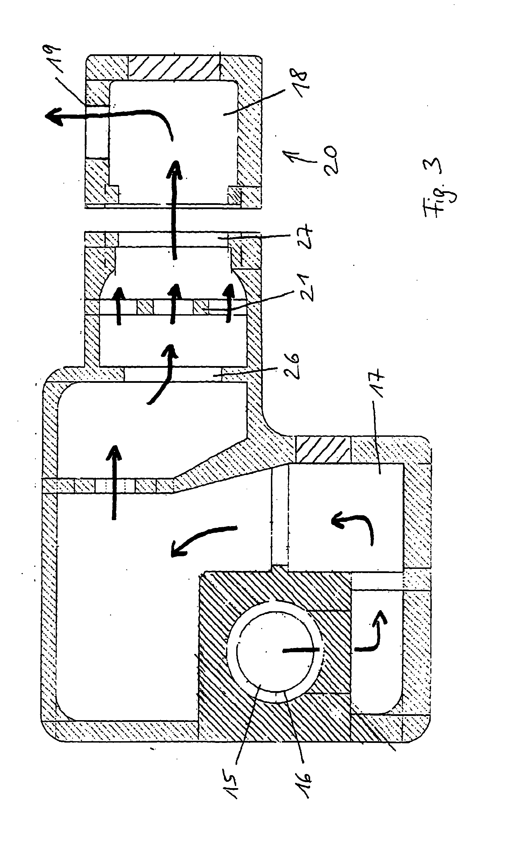

Fig. 3 zeigt eine Schnittansicht eines Druckschalldämpfers, der in einer Versorgungsaggregateanordnung einem Kompressor nachgeschaltet werden kann. Der Strömungsverlauf ist dabei durch Pfeile dargestellt. Durch eine Einlassöffnung 15 gelangt das einströmende Arbeitsfluid, hier die Luft, zunächst in einen Einlasskanal 16 und von dort in einen Zentralkanal 17, der mehrere Umlenkzonen und Ruhezonen umfasst, und schließlich in einen Auslasskanal 18 zur Auslassöffnung 19 des Schalldämpfers. Der Auslasskanal 18 und die Auslassöffnung 19 sind dabei Bestandteil eines drehbaren Druckschalldämpferkopfes 20, der in beliebiger Art und Weise zum übrigen Teil des Schalldämpfers angeordnet und befestigt werden kann. Im hinteren Teil des Zentralkanals 17 ist ferner ein Prallkörper 21 dargestellt, welcher den Luftstrom in mehrere Teilströme teilt.

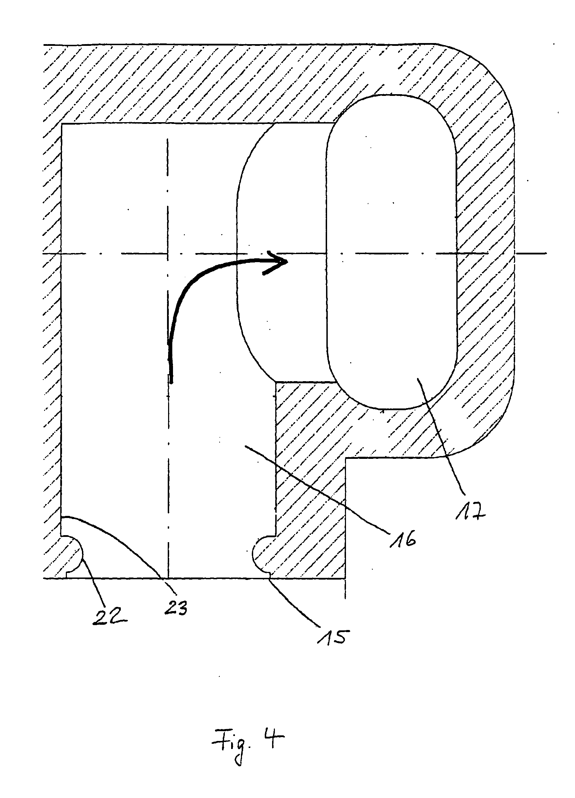

Die wesentlichen Details dieses Druckschalldämpfers werden nun im folgenden anhand der Figuren 4 bis 6 kurz erläutert.

So ist in Fig. 4 eine Schnittansicht eines Druckschalldämpfereinlasses dargestellt, welcher aus einer Einlassöffnung 15 und einem Einlasskanal 16 besteht. Unmittelbar hinter der Einlassöffnung 15 weist der Einlasskanal 16 eine Verengung 22 auf, die durch einen an der Innenwand des Einlasskanals 16 umlaufenden Wulst gebildet wird. Unmittelbar hinter der Verengung 22 schließt sich eine Erweiterung 23 des Einlasskanals 16 an. Der umlaufende Wulst, der einen Radius von 36 mm hat, hat den Vorteil, dass das einströmende Arbeitsfluid, das den Schall transportiert, möglichst wenig mit der Innenwand des Einlasskanals 16 in Berührung kommt, um dadurch den Körperschall zu reduzieren. Nach Passieren einer Umlenkzone, in der die Strömung um 90° umgelenkt wird, wird diese in einen sich an den Einlasskanal 16 anschließenden Zentralkanal 17 geleitet.

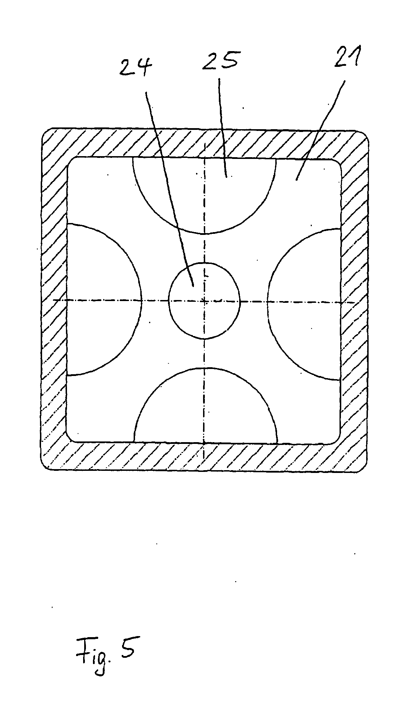

Fig. 5 zeigt eine Schnittansicht einer Kammer im Endbereich des Zentralkanals 17 des Druckschalldämpfers, wobei in dieser Kammer ein weiterer Prallkörper 21 geformt angeordnet ist. Der Prallkörper 21 weist fünf Durchlässe auf, wobei ein Durchlass 24 mittig zwischen vier äußeren Durchlässen 25 angeordnet ist. Die vier äußeren Durchlässe 25 sind dabei halbkreisförmig geformt, wobei der Radius des Halbkreises 30 mm und der Durchmesser folglich 60 mm beträgt. Der mittige Durchlass 24 hat einen Radius von 15 mm und folglich einen Durchmesser von 30 mm. Der Abstand zwischen den jeweils benachbarten äußeren Durchlässen 25 beträgt 44 mm und der Abstand zwischen dem mittigen Durchlass und jedem äußeren Durchlass 27 mm.

Der Prallkörper 21 ist dabei von dem Kammereinlass 26 und dem Kammerauslass 27 jeweils 38 mm entfernt, wie dies Fig. 3 zu entnehmen ist. Mit anderen Worten, der Durchmesser bzw. doppelte Radius des mittigen Durchlasses 24 ist kleiner als der Abstand des Prallkörpers 21 zur Einlassöffnung 26 der Kammer und der Abstand des Prallkörpers 21 zur Einlassöffnung 26 ist wiederum kleiner als der Durchmesser bzw. doppelte Radius der äußeren Durchlässe 25.

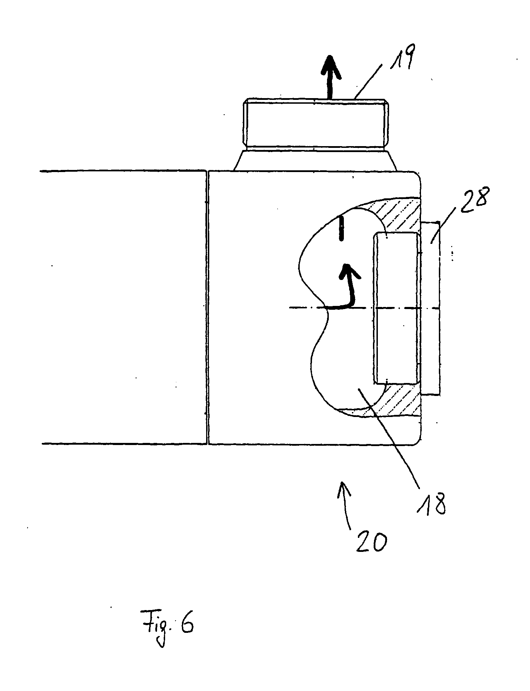

Fig. 6 zeigt schließlich eine Teilschnittansicht eines Ausführungsbeispiels eines Druckschalldämpferauslasses, der von einem beweglichen Kopf 20 gebildet wird. Die Strömung des durch den Auslasskanal 18 strömenden Arbeitsfluids, wiederum dargestellt durch Pfeile, wird unmittelbar vor dem Auslass 19 ein letztes Mal um einen Winkel von 90° umgelenkt. Im dargestellten Fall erfolgt die Umlenkung über einen im Bereich der Umlenkzone befindlichen Blindstopfen 28. Es ist auch denkbar, den Blindstopfen 28 zu entfernen und auf die bisherige Auslassöffnung 19 zu setzen, um dadurch eine alternative Auslassöffnung zu schaffen, die dann in Strömungsrichtung angeordnet wäre, also in unmittelbarer Verlängerung zum Auslasskanal 18.

## Patentansprüche

1. Versorgungsaggregateanordnung für ein Kraftfahrzeug, insbesondere einen Lastkraftwagen, mit einem Kompressor und einem dem Kompressor an dessen druckseitigem Ausgang nachgeschalteten Druckschalldämpfer, **dadurch gekennzeichnet, dass** im Druckschalldämpfer (5) ein Prallkörper (21) vorgesehen ist, der senkrecht zur Strömungsrichtung, vorzugsweise im Zentralkanal (17), angeordnet ist und in Strömungsrichtung mehrere Durchlässe (24, 25) aufweist.

2. Versorgungsaggregateanordnung nach Anspruch 1, **dadurch gekennzeichnet, dass** der Prallkörper (21) ein Prallblech ist.

3. Versorgungsaggregateanordnung nach Anspruch 1 oder 2, **dadurch gekennzeichnet, dass** die äußeren Abmessungen des Prallkörpers (21) den inneren Abmessungen des Zentralkanals (17) entsprechen.

4. Versorgungsaggregateanordnung nach einem der Ansprüche 1 bis 3, **dadurch gekennzeichnet, dass** der Prallkörper (21) fünf Durchlässe (24, 25) hat, wobei ein Durchlass (24) mittig zwischen vier äußeren Durchlässen (25) angeordnet ist.

5. Versorgungsaggregateanordnung nach Anspruch 4, **dadurch gekennzeichnet, dass** die vier äußeren Durchlässe (25) den gleichen Abstand zueinander haben.

6. Versorgungsaggregateanordnung nach Anspruch 4 oder 5, **dadurch gekennzeichnet, dass** die vier äußeren Durchlässe (25) den gleichen Querschnitt haben.

7. Versorgungsaggregateanordnung nach einem der Ansprüche 4 bis 6, **dadurch gekennzeichnet, dass** der Querschnitt des mittigen Durchlasses (24) kleiner als der Querschnitt der äußeren Durchlässe (25) ist.

8. Versorgungsaggregateanordnung nach einem der Ansprüche 4 bis 7, **dadurch gekennzeichnet, dass** der Querschnitt des mittigen Durchlasses (24) rund ist und der Querschnitt der äußeren Durchlässe (25) halbkreisförmig ist.

9. Versorgungsaggregateanordnung nach einem der Ansprüche 6 bis 8, **dadurch gekennzeichnet, dass** der Querschnitt der äußeren Durchlässe (25) mindestens doppelt so groß wie der Querschnitt des mittigen Durchlasses (24) ist.

10. Versorgungsaggregateanordnung nach Anspruch 9, **dadurch gekennzeichnet, dass** der Querschnitt des mittigen Durchlasses (24) 600 bis 800 mm², insbesondere 700 mm², beträgt.

11. Versorgungsaggregateanordnung nach einem der Ansprüche 8 bis 10, **dadurch gekennzeichnet, dass** der Radius der äußeren Durchlässe (25) mindestens doppelt so groß wie der Radius des mittigen Durchlasses (24) ist.

12. Versorgungsaggregateanordnung nach Anspruch 11, **dadurch gekennzeichnet, dass** der Radius des mittigen Durchlasses (24) 10 bis 20 mm, insbesondere 15 mm, beträgt.

13. Versorgungsaggregateanordnung nach einem der Ansprüche 4 bis 12, **dadurch gekennzeichnet, dass** der Abstand zwischen den jeweils benachbarten äußeren Durchlässen (25) zwischen 40 und 50 mm liegt und vorzugsweise 42 mm beträgt.

14. Versorgungsaggregateanordnung nach einem der Ansprüche 4 bis 13, **dadurch gekennzeichnet, dass** der Abstand zwischen dem mittigen Durchlass (24) und den äußeren Durchlässen (25) zwischen 20 und 30 mm liegt und vorzugsweise 27 mm beträgt.

15. Versorgungsaggregateanordnung nach einem der Ansprüche 1 bis 14, **dadurch gekennzeichnet, dass** die Dicke des Prallkörpers (21) bezogen auf die Strömungsrichtung zwischen 5 und 15 mm liegt und vorzugsweise 11 mm beträgt.

16. Versorgungsaggregateanordnung nach einem der Ansprüche 1 bis 15, **dadurch gekennzeichnet, dass** der Prallkörper (21) in einer Kammer des Zentralkanals (17) des Druckschalldämpfers (5) angeordnet ist, die eine Einlassöffnung (26) und eine Auslassöffnung (27) hat, wobei der Prallkörper (21) mittig zwischen der Einlassöffnung (26) und der Auslassöffnung (27) der Kammer angeordnet ist.

17. Versorgungsaggregateanordnung nach Anspruch 16, **dadurch gekennzeichnet, dass** der Abstand zwischen dem Prallkörper (21) und der Einlassöffnung (26) der Kammer 30 bis 50 mm, insbesondere 38 mm, beträgt.

18. Versorgungsaggregateanordnung nach Anspruch 16 oder 17, **dadurch gekennzeichnet, dass** der Durchmesser des mittigen Durchlasses (24) kleiner als der Abstand des Prallkörpers (21) zur Einlassöffnung (26) der Kammer ist, welcher Abstand wiederum kleiner als der Durchmesser der äußeren Durchlässe (25) ist.

## Claims

1. Supply unit arrangement for an automotive vehicle, in particular a truck, with a compressor and a pressure silencer connected downstream of the compressor to its pressure-side output, **characterised in that** a baffle (21) is provided in the pressure silencer (5) which is disposed perpendicular to the flow direction, preferably in the central passage (17), and has several ports (24, 25) in the flow direction.

2. Supply unit arrangement as claimed in claim 1, **characterised in that** the baffle (21) is a baffle plate.

3. Supply unit arrangement as claimed in claim 1 or 2, **characterised in that** the external dimensions of the baffle (21) correspond to the internal dimensions of the central passage (17).

4. Supply unit arrangement as claimed in one of claims 1 to 3, **characterised in that** the baffle (21) has five ports (24, 25) and one port (24) is disposed centrally between four outer ports (25).

5. Supply unit arrangement as claimed in claim 4, **characterised in that** the four outer ports (25) are equidistant from one another.

6. Supply unit arrangement as claimed in claim 4 or 5, **characterised in that** the four outer ports (25) have the same cross-section.

7. Supply unit arrangement as claimed in one of claims 4 to 6, **characterised in that** the cross-section of the central port (24) is smaller than the cross-section of the outer ports (25).

8. Supply unit arrangement as claimed in one of claims 4 to 7, **characterised in that** the cross-section of the central port (24) is round and the cross-section of the outer ports (25) is semicircular.

9. Supply unit arrangement as claimed in one of claims 6 to 8, **characterised in that** the cross-section of the outer ports (25) is at least twice as big as the cross-section of the central port (24).

10. Supply unit arrangement as claimed in claim 9, **characterised in that** the cross-section of the central port (24) is 600 to 800 mm², in particular 700 mm².

11. Supply unit arrangement as claimed in one of claims 8 to 10, **characterised in that** the radius of the outer ports (25) is at least twice as big as the radius of the central port (24).

12. Supply unit arrangement as claimed in claim 11, **characterised in that** the radius of the central port (24) is 10 to 20 mm, in particular 15 mm.

13. Supply unit arrangement as claimed in one of claims 4 to 12, **characterised in that** the distance between the respective adjacent outer ports (25) is between 40 and 50 mm and preferably 42 mm.

14. Supply unit arrangement as claimed in one of claims 4 to 13, **characterised in that** the distance between the central port (24) and the outer ports (25) is between 20 and 30 mm and preferably 27 mm.

15. Supply unit arrangement as claimed in one of claims 1 to 14, **characterised in that** the thickness of the baffle (21) relative to the flow direction is between 5 and 15 mm and preferably 11 mm.

16. Supply unit arrangement as claimed in one of claims 1 to 15, **characterised in that** the baffle (21) is disposed in a chamber of the central passage (17) of the pressure silencer (5) which has an inlet orifice (26) and an outlet orifice (27), and the baffle (21) is disposed centrally between the inlet orifice (26) and the outlet orifice (27) of the chamber.

17. Supply unit arrangement as claimed in claim 16, **characterised in that** the distance between the baffle (21) and the inlet orifice (26) of the chamber is 30 to 50 mm, in particular 38 mm.

18. Supply unit arrangement as claimed in claim 16 or 17, **characterised in that** the diameter of the central port (24) is smaller than the distance of the baffle (21) from the inlet orifice (26) of the chamber, which distance is in turn smaller than the diameter of the outer ports (25).

## Revendications

1. Ensemble d'alimentation pour un véhicule automobile, en particulier pour un camion, comprenant un compresseur et un amortisseur de bruit de refoulement implanté en aval du compresseur sur la sortie côté refoulement de celui-ci, **caractérisé en ce que**, dans l'amortisseur de bruit de refoulement (5), est disposé un corps déflecteur (21) qui est orienté perpendiculairement à la direction d'écoulement, de préférence dans le canal central (17), et qui, dans la direction d'écoulement, est pourvu de plusieurs passages (24, 25).

2. Ensemble d'alimentation selon la revendication 1, **caractérisé en ce que** le corps déflecteur (21) est une tôle déflectrice.

3. Ensemble d'alimentation selon la revendication 1 ou 2, **caractérisé en ce que** les dimensions extérieures du corps déflecteur (21) correspondent aux dimensions intérieures du canal central (17).

4. Ensemble d'alimentation selon une des revendications 1 à 3, **caractérisé en ce que** le corps déflecteur (21) est pourvu de cinq passages (24, 25), un passage (24) se trouvant au milieu des quatre autres passages (25).

5. Ensemble d'alimentation selon la revendication 4, **caractérisé en ce que** les quatre autres passages (25) sont équidistants.

6. Ensemble d'alimentation selon la revendication 4 ou 5, **caractérisé en ce que** les quatre passages extérieurs (25) sont de même section.

7. Ensemble d'alimentation selon une des revendications 4 à 6, **caractérisé en ce que** la section du passage central (24) est inférieure à la section des passages extérieurs (25).

8. Ensemble d'alimentation selon une des revendications 4 à 7, **caractérisé en ce que** la section du passage central (24) est ronde et la section des passages extérieurs (25) est semi-circulaire.

9. Ensemble d'alimentation selon une des revendications 6 à 8, **caractérisé en ce que** la section des passages extérieurs (25) est au moins deux fois supérieure à la section du passage central (24).

10. Ensemble d'alimentation selon la revendication 9, **caractérisé en ce que** la section du passage central (24) est égale à 600 à 800 mm², en particulier à 700 mm².

11. Ensemble d'alimentation selon une des revendications 8 à 10, **caractérisé en ce que** le rayon des passages extérieurs (25) est au moins deux fois supérieur au rayon du passage central (24).

12. Ensemble d'alimentation selon la revendication 11, **caractérisé en ce que** le rayon du passage central (24) est égal à 10 à 20 mm, en particulier à 15 mm.

13. Ensemble d'alimentation selon une des revendications 4 à 12, **caractérisé en ce que** la distance entre les passages extérieurs (25) voisins est comprise entre 40 et 50 mm et est égale de préférence à 42 mm.

14. Ensemble d'alimentation selon une des revendications 4 à 13, **caractérisé en ce que** la distance entre le passage central (24) et les passages extérieurs (25) est comprise entre 20 et 30 mm et est égale de préférence à 27 mm.

15. Ensemble d'alimentation selon une des revendications 1 à 14, **caractérisé en ce que** l'épaisseur du corps déflecteur (21) dans la direction d'écoulement est comprise entre 5 et 15 mm et est égale de préférence à 11 mm.

16. Ensemble d'alimentation selon une des revendications 1 à 15, **caractérisé en ce que** le corps déflecteur (21) est disposé dans une chambre du canal central (17) de l'amortisseur de bruit de refoulement (5), laquelle comporte une ouverture d'entrée (26) et une ouverture de sortie (27), le corps déflecteur (21) étant disposé au milieu entre l'ouverture d'entrée (26) et l'ouverture de sortie (27) de la chambre.

17. Ensemble d'alimentation selon la revendication 16, **caractérisé en ce que** la distance entre le corps déflecteur (21) et l'ouverture d'entrée (26) de la chambre est égale à 30 à 50 mm, en particulier à 38 mm.

18. Ensemble d'alimentation selon la revendication 16 ou 17, **caractérisé en ce que** le diamètre du passage central (24) est inférieur à la distance du corps déflecteur (21) à l'ouverture d'entrée (26) de la chambre, ladite distance étant elle-même inférieure au diamètre des passages extérieurs (25).
